# EUROPÄISCHE PATENTSCHRIFT

(11) **EP 2 025 547 B1**
(45) Veröffentlichungstag und Bekanntmachung des Hinweises auf die Patenterteilung: **22.04.2015**
(21) Anmeldenummer: 08466021.6
(22) Anmeldetag: 07.08.2008
(51) Int. Cl.: B60J 1/20

(54) **System zur Befestigung eines Abdeckungsrollos**
System for attaching a covering roller
Système de fixation d'un store de recouvrement

(30) Priorität: 09.08.2007 CZ 20070530
(43) Veröffentlichungstag der Anmeldung: 18.02.2009
(73) Patentinhaber: Skoda Auto A.S., 293 60 Mladá Boleslav (CZ)
(72) Erfinder: Kraus, Ladislav, 51236 Horní Branná (CZ); Maly, Jaroslav, 51601 Rychnov nad Kneznou (CZ); Novotny, Josef, 51801 Bystré (CZ)

(56) Entgegenhaltungen:
- BE-A2- 900 158
- DE-A1- 3 248 413
- DE-A1-102004 049 059
- DE-A1-102005 057 248
- DE-A1-102007 032 079
- DE-U1- 29 910 890
- US-A- 4 497 515

## Beschreibung

### Technisches Gebiet

Die Erfindung bezieht sich auf die Befestigung des Abdeckungsrollos in der ausgezogenen Position, vor allem des selbsttätig aufrollenden Sonnenrollos der Heckklappe, unter der Verwendung von magnetischen Kräften.

### Bisheriger Stand der Technik

Gegenwärtig werden Automobile oft mit Sonnenrollos ausgestattet, die eine Abdeckung der hinteren Scheibe gegen den Eintritt der Sonneneinstrahlung in den Fahrzeuginnenraum ermöglichen und somit das Aufheizen und eine Blendung des Fahrers verhindert werden. Das Rollo ist in der Regel selbstaufrollend, wobei ein Ende des Rollobandes an ein Rohr befestigt ist, auf welches dieses aufgewickelt ist und welches drehbar in einer Kassette an der Hutablage unter der abzudeckenden Fensterscheibe befestigt ist. An das gegenüberliegende Ende des Rollobandes ist eine Endstange befestigt; diese dient zum Herausziehen des Rollos, wobei diese im Fahrzeuginnenraum in ausgezogener Position befestigt wird und dabei die Fensterscheibe abdeckt. Zur Befestigung des Rollos werden in der Regel Haken, die an der Innenverkleidung des Fahrzeugs vor allem an der Oberkante der abzudeckenden Fensterscheibe angebracht sind, verwendet; an diesen Haken wird die Endstange eingehängt. In manchen Fällen befinden sich Haken an der Endstange, welche in die Befestigungsaussparungen der Innenraumverkleidung einhaken.

Das Einhängen der Endstange in diese Haken ist jedoch schwierig, denn die Stange muss genau eingedreht und gegenüber den Haken positioniert und anschließend eingehakt werden, wobei die Haken in der Regel am Fahrzeughimmel hinter dem Fahrgastsitz angebracht sind, welcher sich wegen der Installation am Sitz leicht drehen und nach hinten beugen muss. Die Durchführung ist vor allem während der Fahrt verhältnismäßig schwierig ausführbar.

Ein weiterer Nachteil einer solchen Lösung ist der Spalt, die zwischen der Endstange und dem Dachhimmel nach einem Einhängen in die Haken entsteht, durch welche Sonnenstrahlen in das Fahrzeuginnere eindringen und den Fahrer durch den Rückspiegel blenden können.

Von BE 900 158 A2 ist ein Abdeckungsrollo bekannt, bei dem die Befestigungsvorrichtung ein an dem Fenster oder der Innenverkleidung festgeklebtes Magnetstreifen ist, wobei ein Teil die Endstange, der mit der Befestigungsvorrichtung korrespondiert, ferromagnetisch ist. Der Magnetstreifen ist flach und äquidistant mit dem abgedeckten Fenster, deswegen ist seine Polverbindungslinie senkrecht zu dem Fenster. Nachteile einer solchen Lösung sind, dass die Endstange sich in Folge von Massenkräften bei der Fahrt an dem Magnetstreifen verschieben kann, was zu Geräuschentwicklung oder zu Auslösung der gemeinsamen Verbindung führen kann. Ein weiterer Nachteil ist sehr schwache Verbindungskraft in querer oder senkrechter Richtung zu dem Fenster, und davon resultierende Unbrauchbarkeit für die Applikationen, wo sich die gegenseitige Lage von Rollokassette und Befestigungsvorrichtung im Betrieb ändert, z. B. bei Sonnenschutzrollos von Fahrzeughecklappen.

Dokument DE 32 48 413 A1 offenbart System zur Befestigung eines Abdeckungsrollos, vor allem eines selbstaufrollenden Sonnenschutzrollos einer Heckklappe von Kraftwagen, wobei das Rollo eine Endstange, die am herauszuziehenden Ende des Rollobandes angebracht ist, besitzt und wobei im Fahrzeuginnenraum wenigstens eine Befestigungsvorrichtung zur lösbaren Befestigung der Endstange in herausgezogener Rolloposition sich befindet, wobei die Befestigungsvorrichtung einen permanenten Magneten aufweist, und dass ein Teil der Endstange, die mit der Befestigungsvorrichtung korrespondiert, ferromagnetisch und / oder mit einem permanenten Magneten versehen ist, der in der befestigten Position der Endstange zum Magneten der Befestigungsvorrichtung mittels gegensätzlichem Pol orientiert ist, und wobei der Magnet in der Befestigungsvorrichtung so angebracht ist, dass dessen Polverbindungslinie an sich äquidistant zur abzudeckenden Fläche verläuft.

Die Benutzung eines Magneten ermöglicht nicht die genaue Ausrichtung der Endstange in der Befestigungsvorrichtung.

### Darstellung der Erfindung

Die aufgeführten Nachteile werden mittels des Systems der Rollobefestigung laut der Erfindung beseitigt. Das Rollo weist eine Endstange am herauszuziehenden Rolloende auf. Im Fahrzeuginnenraum befindet sich mindestens eine Befestigungsvorrichtung zur lösbaren Befestigung der Endstange in ausgezogener Rolloposition. Die Befestigungsvorrichtung beinhaltet wenigstens einen permanenten Magneten, und wenigstens der Stangenbereich, der mit der Befestigungsvorrichtung korrespondiert, ist ferromagnetisch. Die Endstange wird so durch die magnetische Kraft an die Befestigungsvorrichtung angezogen. Im Bedarfsfall hinsichtlich einer höheren Haftkraft kann dieser Bereich der Endstange auch mit wenigstens einem permanenten Magneten versehen werden; in der befestigten Position der Endstange orientiert zum Magneten der Befestigungsvorrichtung mit entgegen gesetzter Polarität.

Der Magnet ist in der Befestigungsvorrichtung so angebracht, dass die Verbindungslinie seiner Pole (Magnetachse) äquidistant zur abzudeckenden Fläche, d.h. in der Regel die Fensterscheibe, steht. Dieses ist vor allem bei Fensterscheibenabdeckungsrollos von Heckklappe von Vorteil, wo die Kassette mit dem Aufrollmechanismus des Rollos sich in der Hutablage und die Befestigungsvorrichtung für die Endstange sich an der Heckklappe im Bereich der Scheibenoberkante befindet. Bei der Öffnung der Heckklappe vergrößert sich nicht nur die Entfernung der befestigten Endstange von der Kassette, und dadurch auch die Kraft, die der Spannmechanismus auf das Rollo ausübt, es kommt auch zur Drehung der Befestigungsvorrichtung um den Klappenöffnungswinkel. Dadurch dreht sich auch die Richtung der Kraft auf die Endstange hinsichtlich des Rollos, und dieses im Wesentlichen um den Klappenöffnungswinkel, somit wirkt die Kraft im wesentlichem senkrecht zur Magnetachse. Die Befestigungsvorrichtung weist eine Auflagefläche für die Endstange auf, welche ausgewölbt ist und / oder wenigstens auf der von der Scheibe abgewendeten Seite durch einen Nocken begrenzt ist. Dieser Nocken hilft bei der Einführung der Endstange beim Befestigen in ausgezogener Rolloposition und verhindert das herunterfallen der Endstange aus der Befestigungsvorrichtung und unterstützt so die magnetische Haftkraft. Die Wölbung der Auflagefläche ermöglicht eine genaue Einrichtung der endgültigen Position der Endstange.Die Befestigungsvorrichtungen werden vorteilhaft im Paar angeordnet und korrespondieren mit den Enden der Endstange, die über die Breite des Rollos hinausgehen. In diesem Fall kann die Auflagefläche beispielsweise eine viereckige Form umgeben mit Nocken an drei Seiten haben. Diese Nocken helfen dann nicht nur bei der Befestigung der Endstange, sondern sie verhindern auch die Verschiebung gegenüber der Befestigungsvorrichtung während der Fahrt beispielsweise in Folge der Trägheitskraft. Die Endstange wird in der Regel aus unmagnetischem Material z.B. Kunststoff oder einer Leichtmetalllegierung gefertigt, anschließend wird an der Stelle der Überlappung mit der Befestigungsvorrichtung ein Endstück oder eine Platte aus ferromagnetischem Material angebracht. Die Oberfläche einer solchen Platte kann im Grunde in einer Ebene mit der Oberfläche der Endstange liegen, so dass diese mit der Endstange ein glattes Ganzes bildet; in der eingerollten Position des Rollos steht die gesamte Endstange nicht störend über die Oberfläche der Hutablage, durch welche das Rolle verläuft.

Der Magnet kann in der Befestigungsvorrichtung vorteilhaft beweglich angebracht werden, was deren eigenständige Ausrichtung der genauen Position gegenüber der Endstange und somit den perfekten Kontakt sicherstellt.

Die Befestigungsvorrichtung ist erfindungsgemäß auch mit mehreren Magneten versehen, die so angebracht sind, dass deren Polverbindungslinien sich in einem Punkt über der Auflagefläche für die Endstange kreuzen. Eine solche Magnetenposition ermöglicht die genaue Ausrichtung der Endstange in der Befestigungsvorrichtung.

### Übersicht der Figuren der Zeichnungen

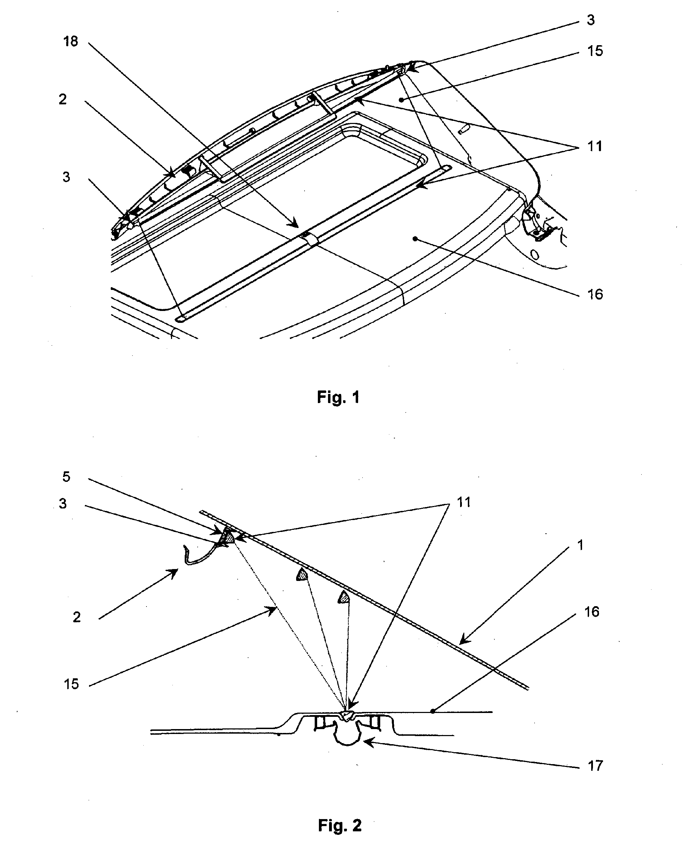

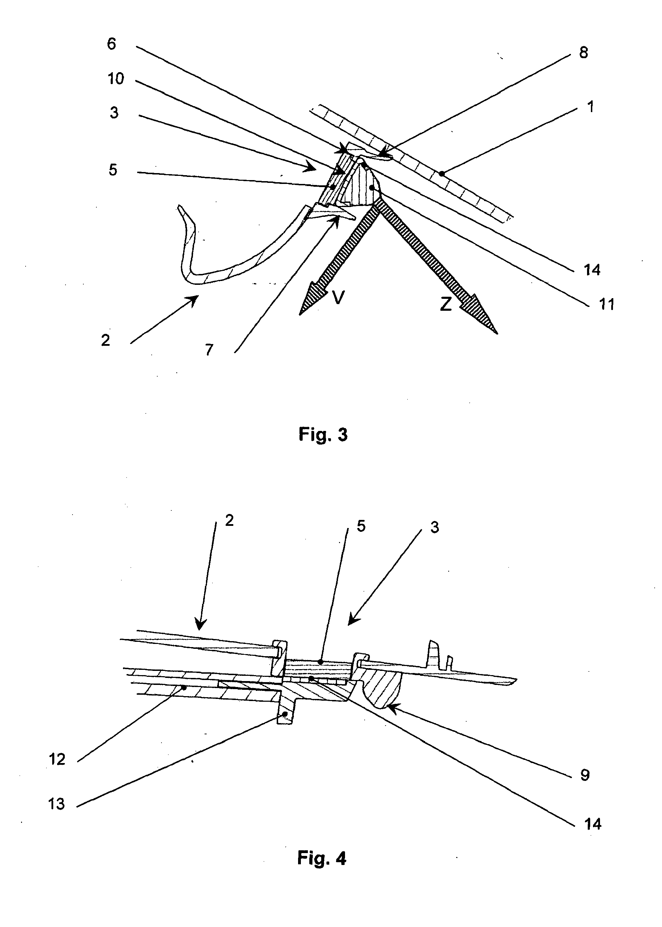

In der Figur 1 ist schematisch der hintere Bereich des Personenkraftwagens mit geschlossener Heckklappe dargestellt. Hinsichtlich der Heckklappe ist hier lediglich die Verkleidung des Innenbereichs dargestellt. In der Figur 2 befindet sich der senkrechte Längsschnitt dieses Fahrzeugbereichs mit Rollo in ausgezogener Position und in den Zwischenpositionen bei der Umstellung aus der eingerollten Position. In den weiteren Figuren wird im Detail die Befestigungsvorrichtung mit festgemachter Endstange dargestellt, wobei in der Figur 3 der senkrechte Längsschritt und in der Figur 4 der senkrechte Querschnitt dargestellt ist.

### Ausführungsbeispiel der Erfindung

In den beigelegten Figuren wird das Ausführungsbeispiel der Erfindung an einem Personenkraftwagen mit ausstellbarer Heckklappe dargestellt. Unter der Hutablage 16 befindet sich die Kassette 17 in der sich drehbar ein nicht näher dargestelltes Rohr mit einer Aufspulvorrichtung befindet. An diesem Rohr ist mit einem Ende das Rolloband 15 befestigt, welches auf diesem aufgerollt ist. Das Rolloband 15 durchläuft den Schlitz der Hutablage 16 und das gegenüberliegende Ende ist mit einer Endstange 11 versehen. Die Endstange 11 und der Schlitz in der Hutablage 16 haben eine zu einander angepasste Form, so dass in der eingerollten Position die Endstange 11 in den Schlitz einfährt und nicht über die Außenoberfläche der Hutablage 16 übersteht. Die Endstange 11 ist länger als die Rollobandbreite 15, so dass die Enden über dieses überstehen. Die näher nicht dargestellte Heckklappe ist mit einer Scheibe 1 und der Innenverkleidung 2 im oberen Bereich versehen. In dieser Innenverkleidung 2 sind zwei Befestigungsvorrichtungen 3 eingefasst, angeordnet in der Nähe der Fensterscheibe 1 und in zueinander entsprechender Länge der Endstange 11. In der Befestigungsvorrichtung 3 ist mit den Nocken 6 mit Spiel ein Magnet 5 eingesetzt, also kann dieser sich in seiner Einfassung in einem bestimmten Maße verschieben und kippen. Die Magnetachse 5, also die Verbindungslinie seiner Pole, ist im wesentlichem äquidistant mit der Fensterscheibe 1. Der Magnet 5 zusammen mit der Befestigungsvorrichtung 3 bildet die Auflagefläche 10, die leicht gewölbt ist. Diese Auflagefläche 10 ist auf der von der Fensterscheibe 1 abgewandten Seite durch eine erste Nocke 7 und auf der zur Fensterscheibe zugewandten Seite 8 durch eine zweite Nocke begrenzt. Seitlich ist die Auflagefläche 10 durch den seitlichen Nocken 9 begrenzt. Ein Magnet 5 in der Befestigungsvorrichtung kann auch durch eine Zusammenstellung mehrer Magnete ersetzt werden, die gegeneinander so gedreht sind, dass sich deren Polverbindungslinien in einem Punkt über der Auflagefläche 10 kreuzen. Diese Lösung bedeutet jedoch bei der Lösung der gleichen Auflageflächengröße in der Regel eine Verkleinerung der Magnetengesamtfläche und damit auch der Haftkraft, was durch eine Verwendung von beispielsweise stärkeren Magneten kompensiert werden muss.

Die Endstange 11 wird durch eine Aluminiumleiste 12, in der an den Enden Kunststoffabschlussstücke 13 eingesteckt sind, gebildet; auf deren Oberfläche befinden sich metallische Platten 14. Die Platten haben eine ähnliche Form wie die Leiste 12, und diese sind in die Abschlussstücke 13 so eingelassen, dass deren Oberfläche auf dem Niveau mit der Oberfläche der Leiste 12 sich befindet. Die Platten 14 gehen so in die Leiste 12 über und stören so den optischen Eindruck eines glatten Stangenabschlusses 11 nicht, vor allem nicht in der Aufgezogenen Rolloposition, wo sich die Endstange 11 in den Schlitz der Hutablage 16 einfügt. Die Platte 14, bzw. das Abschlussstück 13, kann durch einen permanenten Magneten ersetzt werden; der hin zur Oberfläche der Endstange 11 mit dem gegensätzlichen Pol, im Vergleich zum Pol des Magneten 5 zur Auflagefläche 10, verdreht ist, wodurch eine höhere Haftkraft erzielt wird. In der Mitte der Endstange 11 befindet sich ein Griff 20, welcher zum Fassen und für das Handling dient.

Für das Herausziehen des Rolls muss die bedienende Person, in der Regel der Beifahrer im Fond des Personenkraftwagens, den Griff 20 fassen und die Endstange 11 nach oben und nach vorn in Richtung der Befestigungsvorrichtung 3 ziehen. Aufgrund der Haftkraft der Magneten 5 werden die Platten 14 bzw. die Endstange 11 zur Auflagefläche 10 angezogen, wobei die korrekte Ausrichtung beim Einsetzen die Führungsnocken 7, 8 und 9 unterstützen. Die erste Nocke 7 und die zweite Nocke 8 bestimmt die korrekte Position der Endstange 11 in senkrechter Richtung zu derer Achse, die seitliche Nocke 9 in Richtung derer Achse. Nach Aufsatz der Platte 14 auf die Auflagefläche 10 werden die Magneten 5 selbsttätig aufgrund des Spiels der Lagerung so eingerichtet, dass diese genau auf die Platte 14 aufliegen.

Die Rollobefestigung in der herausgezogenen Position wird dadurch vereinfacht, dass in dieser Position die Endstange 11 an sich nach vorn um den Winkel verdreht ist, wie die Hand des Beifahrers den Weg beim herausziehen nach oben beschrieben hat; die Endstange 11 wird bei einem Halten am Griff 20 selbstständig nahe der benötigten Position gedreht. Zusätzlich aufgrund der Anzugskraft der Magneten 5 ist es nicht notwendig die Endstange komplett genau zu drehen und anzubringen, diese wird selbsttätig an die Auflagefläche 10 gezogen.

Bei der Schließung der Heckklappe übt das Rolloband 15 eine Kraftwirkung auf die Endstange 11 in Richtung Z aus; die in der Regel mit der abgedeckte Fensterscheibe 1 einen spitzen Winkel bildet, resultierend daraus wird die Anschlussstange 11 lediglich von der Auflagefläche 10 gezogen. In der befestigten Position wird diese lediglich mittels der magnetischen Kraft gehalten. Bei der Öffnung der Heckklappe wird die Richtung der Kraft des Rollobands 15 in die Richtung V gedreht und in der Regel wird auch deren Stärke, resultierend aus dem Herausziehen eines längeren Bandabschnitts des Rollos 15, größer. In dieser Position wird die Endstange 11 nicht nur durch die magnetische Kraft der Magneten 5 gehalten, sondern diese kann auch an den ersten Nocken 7 anlehnen, die eine Verschiebung auf der Auflagefläche 10 verhindern. Hinsichtlich einer Bewegung wird diese auch durch die leicht gewölbte Form der Auflagefläche 10 gehindert, welche im Bedarfsfall auch in einem wesentlich geringeren Radius gewölbt sein kann bzw. die Auflagefläche kann gekröpft sein, z.B. in der Form des Buchstaben V. In diesem Fall wird der Vorteil einer glatten Fläche der Platte 14 und die optische Vereinheitlichung der Endstange 11 mit der Hutablage 16 in eingerollter Rolloposition eliminiert.

Zur Entnahme des Rollos von der Befestigungsvorrichtung ergreift der Anwender dein Griff 20 und durch die Verschiebung z.B. nach hinten, dreht er die Endstange 11, die so einfach unter einer minimalen Kraftaufwendung einseitig von der Auflagefläche 10 abklappt und frei wird.

### Gewerbliche Anwendbarkeit

Das Befestigungssystem des Abdeckungsrollos laut der Erfindung kann bei allen Rollos verwendet werden, vor allem bei selbstaufrollenden Sonnenschutzrollos der Heckklappen von Personenkraftwagen.

## Patentansprüche

1. System zur Befestigung eines Abdeckungsrollos, vor allem eines selbstaufrollenden Sonnenschutzrollos einer Heckklappe von Kraftwagen, wobei das Rollo eine Endstange, die am herauszuziehenden Ende des Rollobandes angebracht ist, besitzt und wobei im Fahrzeuginnenraum wenigstens eine Befestigungsvorrichtung zur lösbaren Befestigung der Endstange in herausgezogener Rolloposition sich befindet, wobei die Befestigungsvorrichtung (3) wenigstens einen permanenten Magneten (5) aufweist, und dass ein Teil der Endstange (11), die mit der Befestigungsvorrichtung (3) korrespondiert, ferromagnetisch und / oder mit mindestens einem permanenten Magneten versehen ist, der in der befestigten Position der Endstange (11) zum Magneten (5) der Befestigungsvorrichtung (3) mittels gegensätzlichem Pol orientiert ist, und wobei der Magnet (5) in der Befestigungsvorrichtung (3) so angebracht ist, dass dessen Polverbindungslinie an sich äquidistant zur abzudeckenden Fläche (1)verläuft, **dadurch gekennzeichnet, dass** die Befestigungsvorrichtungen mindestens mit zwei Magneten versehen sind, wobei die Magneten so angebracht sind, dass die Polverbindungslinien sich in einem Punkt kreuzen.

2. System zur Befestigung eines Abdeckungsrollos nach Anspruch 1,
**dadurch gekennzeichnet, dass** die Befestigungsvorrichtungen (3) paarig angebracht sind und mit den Enden der Endstange (11), die über die Rollobandbreite (15) hinausragen, korrespondieren.

3. System zur Befestigung eines Abdeckungsrollos nach einem der vorherigen Ansprüche, **dadurch gekennzeichnet, dass** die Befestigungsvorrichtungen (3) eine Auflagefläche (10) für die Endstange (11) aufweist, und dass diese Fläche gewölbt ist und / oder, wenigstens auf der von der abzudeckenden Fläche (1) abgewandten Seite, mit wenigstens einer Nocke (7, 8, 9) eingefasst ist.

4. System zur Befestigung eines Abdeckungsrollos nach einem der vorherigen Ansprüche, **dadurch gekennzeichnet, dass** die Endstange (11) an der mit der Befestigungsvorrichtung (3) korrespondierenden Stelle mit einer Platte (14) aus ferromagnetischem Material versehen ist.

5. System zur Befestigung eines Abdeckungsrollos nach Anspruch 4,
**dadurch gekennzeichnet, dass** sich die Oberfläche der Platten im wesentlichem in einer Ebene zur Oberfläche der Endstange befindet.

6. System zur Befestigung eines Abdeckungsrollos nach einem der vorherigen Ansprüche, **dadurch gekennzeichnet, dass** die Magneten (5) in der Befestigungsvorrichtung (3) beweglich gelagert sind.

## Claims

1. System for fastening a covering roller blind, especially a self-winding sun roller blind of a tailgate of motor vehicles, wherein the roller blind has an end rod which is attached to that end of the roller blind strip which is to be pulled out, and wherein at least one fastening device for the releasable fastening of the end rod in the pulled-out roller blind position is located in the vehicle interior, wherein the fastening device (3) has at least one permanent magnet (5), and wherein part of the end rod (11), which corresponds with the fastening device (3), is ferromagnetic and/or is provided with at least one permanent magnet which, in the fastened position of the end rod (11), is oriented by means of an opposite pole with respect to the magnet (5) of the fastening device (3), and wherein the magnet (5) is attached in the fastening device (3) in such a manner that the pole connecting line of said magnet runs equidistantly per se from the surface (1) to be covered, **characterized in that** the fastening devices are provided with at least two magnets, wherein the magnets are attached in such a manner that the pole connecting lines intersect at a point.

2. System for fastening a covering roller blind according to Claim 1, **characterized in that** the fastening devices (3) are attached in pairs and correspond with the ends of the end rod (11), which ends project beyond the roller blind strip width (15).

3. System for fastening a covering roller blind according to either of the preceding claims, **characterized in that** the fastening devices (3) have a support surface (10) for the end rod (11), and **in that** said surface is curved and/or is bordered by at least one cam (7, 8, 9) at least on the side facing away from the surface (1) to be covered

4. System for fastening a covering roller blind according to one of the preceding claims, **characterized in that** the end rod (11) is provided with a plate (14) made of ferromagnetic material at the point corresponding with the fastening device (3).

5. System for fastening a covering roller blind according to Claim 4, **characterized in that** the surface of the plates is located substantially in one plane with the surface of the end rod.

6. System for fastening a covering roller blind according to one of the preceding claims, **characterized in that** the magnets (5) are mounted movably in the fastening device (3).

## Revendications

1. Système de fixation d'un store de recouvrement, avant tout d'un store pare-soleil auto-enrouleur d'un hayon arrière de véhicules automobiles, le store comportant une tige d'extrémité qui est montée à l'extrémité à sortir de la bande de store, et au moins un dispositif de fixation pour la fixation amovible de la tige d'extrémité dans la position de store sortie se trouvant dans l'espace intérieur du véhicule, le dispositif de fixation (3) comprenant au moins un aimant permanent (5), et une partie de la tige d'extrémité (11) qui correspond au dispositif de fixation (3) étant ferromagnétique et/ou pourvue d'au moins un aimant permanent qui, dans la position fixée de la tige d'extrémité (11), est orienté vers l'aimant (5) du dispositif de fixation (3) au moyen d'un pôle opposé, et l'aimant (5) étant monté dans le dispositif de fixation (3) de telle sorte que sa ligne de liaison des pôles s'étende en soi de manière équidistante par rapport à la surface à recouvrir (1), **caractérisé en ce que** les dispositifs de fixation sont pourvus d'au moins deux aimants, les aimants étant montés de telle sorte que les lignes de liaison des pôles se croisent en un point.

2. Système de fixation d'un store de recouvrement selon la revendication 1, **caractérisé en ce que** les dispositifs de fixation (3) sont montés par paires et correspondent aux extrémités de la tige d'extrémité (11) qui font saillie au-delà de la largeur de la bande de store (15).

3. Système de fixation d'un store de recouvrement selon l'une quelconque des revendications précédentes, **caractérisé en ce que** les dispositifs de fixation (3) comprennent une surface d'appui (10) pour la tige d'extrémité (11), et **en ce que** cette surface est bombée et/ou est encadrée, au moins sur le côté opposé à la surface à recouvrir (1), par au moins un ergot (7, 8, 9).

4. Système de fixation d'un store de recouvrement selon l'une quelconque des revendications précédentes, **caractérisé en ce que** la tige d'extrémité (11) est pourvue d'une plaque (14) en matériau ferromagnétique au point correspondant au dispositif de fixation (3).

5. Système de fixation d'un store de recouvrement selon la revendication 4, **caractérisé en ce que** la surface des plaques se trouve essentiellement dans un plan par rapport à la surface de la tige d'extrémité.

6. Système de fixation d'un store de recouvrement selon l'une quelconque des revendications précédentes, **caractérisé en ce que** les aimants (5) sont montés de manière mobile dans le dispositif de fixation (3).
